(19) Europäisches Patentamt
European Patent Office
Office européen des brevets

(11) **EP 4 373 115 A1**

(12) **EUROPEAN PATENT APPLICATION**
published in accordance with Art. 153(4) EPC

(43) Date of publication:
**22.05.2024 Bulletin 2024/21**

(21) Application number: **22841651.7**

(22) Date of filing: **02.02.2022**

(51) International Patent Classification (IPC):
**H04N 23/60** (2023.01)     **H04N 23/698** (2023.01)

(52) Cooperative Patent Classification (CPC):
**G02B 7/28; G03B 13/36; G03B 15/00**

(86) International application number:
**PCT/JP2022/003996**

(87) International publication number:
**WO 2023/286301 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2021 JP 2021117636**

(71) Applicant: **Sony Group Corporation
Tokyo 108-0075 (JP)**

(72) Inventor: **KURATA, Tohru
Tokyo 108-0075 (JP)**

(74) Representative: **D Young & Co LLP
3 Noble Street
London EC2V 7BQ (GB)**

(54) **FOCUS CONTROL DEVICE, FOCUS CONTROL METHOD, AND IMAGING DEVICE**

(57)     To enable focus control capable of reducing cost and power consumption and downsizing.

Machine learning is performed to generate a depth map. A control unit 134b performs focus control by using a depth map generated by a depth calculation unit 134, and switches to different control between a tracking mode for tracking a predetermined subject a non-tracking mode for not tracking the predetermined subject. For example, in a case of the tracking mode, focus control to focus on the predetermined subject searched for on the basis of subject distance information generated by using the depth map is performed. In a case of the non-tracking mode, focus control to focus on the subject at the nearest position indicated by the subject distance information generated by using the depth map is performed. Even if a ranging sensor is not provided, the focus control according to the tracking mode or the non-tracking mode can be performed by using the depth map generated on the basis of the captured image.

*FIG. 2*

EP 4 373 115 A1

## Description

TECHNICAL FIELD

The present technology relates to a focus control device, a focus control method, and an imaging device, and enables focus control at low cost.

BACKGROUND ART

Conventionally, various focus control technologies for automatically focusing on a subject have been proposed. For example, Patent Document 1 discloses a technology of performing focus control by using both a distance measurement result of a ranging sensor and an evaluation value calculated at a predetermined cycle by using a high-frequency component of a specific region of an image signal.

CITATION LIST

PATENT DOCUMENT

Patent Document 1: Japanese Patent Application Laid-Open No. 2008-009341

SUMMARY OF THE INVENTION

PROBLEMS TO BE SOLVED BY THE INVENTION

Incidentally, if a ranging sensor is used, the cost increases and the power consumption also increases. Furthermore, a space for installing the ranging sensor is required, and downsizing becomes difficult.

Therefore, an object of the present technology is to provide a focus control device, a focus control method, a program, and an imaging device capable of reducing cost and power consumption and downsizing.

SOLUTIONS TO PROBLEMS

A first aspect of the present technology is a focus control device including:
a control unit configured to perform focus control by using a depth map generated from a captured image including a predetermined subject, and switch the focus control to different control between a tracking mode for tracking the predetermined subject and a non-tracking mode for not tracking the predetermined subject.

In the present technology, the control unit performs focus control by using a depth map generated by performing machine learning using a captured image including a predetermined subject. In a case of the tracking mode for tracking a subject, the control unit performs focus control to focus on the predetermined subject searched for on the basis of subject distance information generated by using the depth map. The subject distance information is generated by using a depth value indicated by the depth map and a depth value of the predetermined subject. Furthermore, the control unit may generate the subject distance information by using an adjustment coefficient for adjusting a distance relationship between the depth value indicated by the depth map and the depth value of the predetermined subject, specifically, an adjustment coefficient for adjusting a distance difference corresponding to a depth difference between the depth value indicated by the depth map and the depth value of the subject. The adjustment coefficient is set according to a composition of the captured image, for example. Moreover, the control unit may perform filtering processing in the time direction to generate the subject distance information. In the filtering processing in the time direction, for example, the filtering processing is performed on the depth map.

Furthermore, in a case of the non-tracking mode for not tracking the predetermined subject, the control unit performs focus control to focus on a subject at a nearest position indicated by the subject distance information generated by using the depth map, for example, a subject at the nearest position within a search range provided in the captured image.

A second aspect of the present technology is a focus control method including:
by a control unit, performing focus control by using a depth map generated from a captured image including a predetermined subject, and switching the focus control to different control between a tracking mode for tracking the predetermined subject and a non-tracking mode for not tracking the predetermined subject.

A third aspect of the present technology is a program for causing a computer to execute focus control of an imaging device, the program causing the computer to execute:

> a procedure of performing focus control by using a depth map generated from a captured image including a predetermined subject; and
> a procedure of switching the focus control to different control between a tracking mode for tracking the predetermined subject and a non-tracking mode for not tracking the predetermined subject.

Note that, the program of the present technology is the program which may be provided by a storage medium and a communication medium provided in a computer-readable form, for example, a storage medium such as an optical disk, a magnetic disk, and a semiconductor memory, or a communication medium such as a network to a general-purpose computer capable of executing various program codes, for example. By providing such a program in the computer-readable form, processing according to the program is implemented on the computer.

A fourth aspect of the present technology is an imaging device including:

an imaging unit configured to generate a captured image; and

a control unit configured to generate a depth map from a captured image generated by the imaging unit and including a predetermined subject, perform focus control by using the depth map, and switch the focus control to different control between a tracking mode for tracking the predetermined subject and a non-tracking mode for not tracking the predetermined subject.

BRIEF DESCRIPTION OF DRAWINGS

Fig. 1 is a diagram illustrating a configuration of an imaging device.
Fig. 2 is a diagram illustrating a configuration of an image processing unit.
Fig. 3 is a flowchart illustrating a flowchart of focus control operation in the imaging device.
Fig. 4 is a view illustrating captured images acquired by the imaging device.
Fig. 5 is a view illustrating depth maps.
Fig. 6 is a view illustrating focus operation.
Fig. 7 is a view illustrating subject distance information in a case where an adjustment coefficient c is set to "1".
Fig. 8 is a view illustrating subject distance information in a case where the adjustment coefficient c is set to "2".
Fig. 9 is a view illustrating subject distance information in a case where the adjustment coefficient c is set to "0.5".
Fig. 10 is a view illustrating subject distance information in a case where IIR filtering processing is performed.

MODE FOR CARRYING OUT THE INVENTION

Hereinafter, a mode for carrying out the present technology is described.
Note that, the description will be given in the following order.

1. Regarding Configuration of Imaging Device
2. Regarding Operation of Imaging Device
2-1. Operation of Imaging device
2-2. Operation Example
2-3. Other Operations
3. Application Example

<1. Regarding Configuration of Imaging Device>

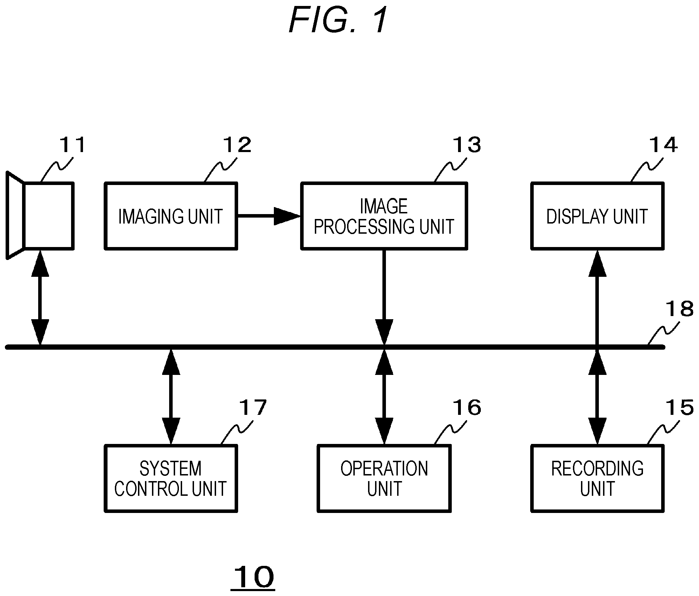

Fig. 1 illustrates a configuration of an imaging device using a focus control device of the present technology. An imaging device 10 includes an imaging optical system 11, an imaging unit 12, an image processing unit 13, a display unit 14, a recording unit 15, an operation unit 16, a system control unit 17, and a bus 18.
The imaging optical system 11 is configured with use of a focus lens, a zoom lens, and the like. The imaging optical system 11 drives the focus lens, the zoom lens, and the like on the basis of control signals from the image processing unit 13 and the system control unit 17 to form a subject optical image on an imaging surface of the imaging unit 12. Furthermore, the imaging optical system 11 may be provided with an iris (diaphragm) mechanism, a shutter mechanism, and the like.
The imaging unit 12 is configured with use of an imaging element such as a complementary metal oxide semiconductor (CMOS) or a charge coupled device (CCD). The imaging unit 12 performs photoelectric conversion, and generates an analog imaging signal corresponding to the subject optical image. Furthermore, the imaging unit 12 performs correlated double sampling (CDS) processing, auto gain control (AGC) processing, analog/digital (A/D) conversion processing, and the like on the analog imaging signal to output the obtained digital image signal to the image processing unit 13.

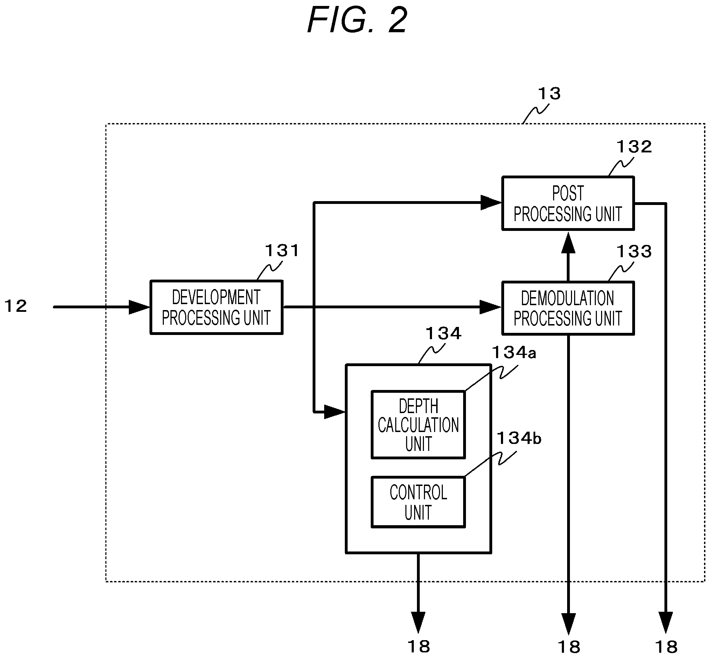

Fig. 2 illustrates a configuration of the image processing unit. The image processing unit 13 includes a development processing unit 131, a post processing unit 132, a demodulation processing unit 133, and a focus control unit 134.
The development processing unit 131 performs clamping processing, defect correction processing, demosaic processing, and the like on the digital image signal supplied from the imaging unit 12. The development processing unit 131 performs clamping processing, and sets a signal level of a pixel in a black state without light to a predetermined level in the image signal generated by the imaging unit 12. Furthermore, the development processing unit 131 performs defect correction, and corrects a pixel signal of a defective pixel by using, for example, pixel signals of surrounding pixels. Moreover, the development processing unit 131 performs demosaic processing, and generates an image signal in which one pixel indicates respective color components (for example, a red component, a green component, and a blue component) from the image signal which is generated by the imaging unit 12 and in which one pixel indicates one color component. The development processing unit 131 outputs the image signal subjected to development processing to the post processing unit 132, the demodulation processing unit 133, and the focus control unit 134.
The post processing unit 132 performs noise removal, white balance adjustment, gamma adjustment, distortion correction, camera shake correction, image quality improvement processing, image enlargement/reduction processing, encoding processing, and the like, according to user settings and as necessary, and generates an image signal suitable for image display, recording, and the like. Note that the white balance adjustment is performed by using, for example, a white balance coefficient calculated by the demodulation processing unit 133. Furthermore, the post processing unit 132 outputs an image signal used to display an image to the display unit 14, and outputs an image signal used to record an image to the recording unit 15.

The demodulation processing unit 133 calculates a white balance coefficient on the basis of a luminance value, an integral value, or the like of each color component by using an image signal of a demodulation region set automatically or by a user, and outputs the white balance coefficient to the post processing unit 132. Furthermore, the demodulation processing unit 133 may drive the diaphragm or the like so that a subject in the demodulation region has appropriate brightness by discriminating the exposure state on the basis of the image signal of the demodulation region, generating an exposure control signal on the basis of the discrimination result, and outputting the exposure control signal to the imaging optical system 11.

The focus control unit 134 generates a control signal so as to focus on a predetermined subject on the basis of the image signal supplied from the development processing unit 131, and outputs the control signal to the imaging optical system 11. The focus control unit 134 includes a depth calculation unit 134a that calculates depth by using the image signal, and a control unit 134b that performs focus control by using the depth value calculated by the depth calculation unit 134a.

The depth calculation unit 134a generates a depth map of an imaging region by machine learning using the image signal supplied from the development processing unit 131, for example, deep learning such as deep neural network (DNN). Furthermore, the depth calculation unit 134a calculates the depth value of a predetermined subject by machine learning using the image signal. The predetermined subject may be set on the basis of the depth map, or may be set on the basis of a subject recognition result or a user instruction.

The control unit 134b performs focus control by using a depth map generated from a captured image including the predetermined subject, and switches the focus control to different control between a tracking mode for tracking and keeping focusing on the predetermined subject and a non-tracking mode for not tracking the predetermined subject. For example, in a case of the tracking mode, the control unit 134b performs focus control on the basis of subject distance information generated by using the depth value indicated by the depth map and the depth value of the predetermined subject. Furthermore, in a case of the non-tracking mode, the control unit 134b performs the focus control by using the depth map as the subject distance information. The control unit 134b generates a control signal for focusing on the predetermined subject on the basis of the subject distance information, and outputs the control signal to the imaging optical system 11.

The display unit 14 is a display device including, for example, a liquid crystal display (LCD), a plasma display panel (PDP), an organic electro luminescence (EL) panel, or the like. The display unit 14 displays a user interface and a menu screen of the imaging device 10, a through image being captured, a still image or a video recorded in the recording unit 15, and the like.

The recording unit 15 is configured by using, for example, a recording medium such as a hard disk or a memory card. The recording medium may be fixed to the imaging device 10 or may be detachably provided. The recording unit 15 records the image generated by the post processing unit 132 of the image processing unit 13 on a recording medium. For example, the recording unit 15 records an image signal of a still image in a compressed state on the basis of a predetermined standard (for example, joint photographic experts group (JPEG) or the like). Furthermore, information regarding the recorded image (for example, exchangeable image file format (EXIF) data including additional information such as imaging date and time, or the like) is also recorded in association with the image. Furthermore, the recording unit 15 records the image signal of a video in a compressed state on the basis of a predetermined standard (for example, moving picture experts group 2 (MPEG2), MPEG4, or the like). Note that compression and expansion of the image signal may be performed by the recording unit 15 or may be performed by the post processing unit 132 of the image processing unit 13.

The operation unit 16 includes, for example, a power button for switching power on/off, a release button for instructing start of recording of a captured image, an operator for zoom adjustment, a touch screen integrally configured with the display unit 14, and the like. The operation unit 16 generates an operation signal according to a user operation and outputs the signal to the system control unit 17.

The system control unit 17 includes a central processing unit (CPU), a random access memory (RAM), a read only memory (ROM), and the like. The ROM stores programs that are read and operated by the CPU, and the like. The RAM is used as a work memory of the CPU. The CPU executes various processes according to programs stored in the ROM and issues commands, thereby controlling operation of each unit so that the imaging device 10 performs operation according to user operation. Note that the program of the system control unit 17 is not limited to being installed in advance, and may be updated by downloading or using a distributed recording medium. Furthermore, the system control unit 17 may be provided with some or all of the functions of the focus control unit 134.

The bus 18 electrically connects the above-described units so that an image signal, a control signal, and the like can be transmitted and received. Note that the bus 18 may include a plurality of types of buses.

<2. Regarding Operation of Imaging Device>

<2-1. Operation of Imaging device>

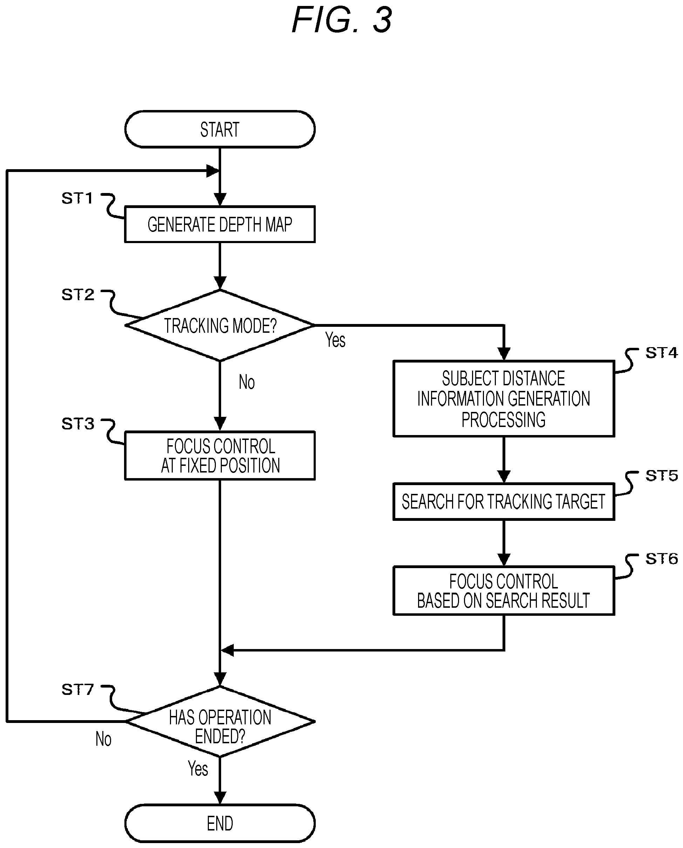

Fig. 3 is a flowchart illustrating a flowchart of a focus control operation in the imaging device. In step ST1, the image processing unit 13 generates a depth map. The focus control unit 134 of the image processing unit 13 calculates the depth value by machine learning using the image signal generated by development processing, generates the depth map of the imaging region, and proceeds to step ST2.

In step ST2, the image processing unit 13 determines whether or not it is the tracking mode. The focus control unit 134 of the image processing unit 13 proceeds to step ST4 in a case where the tracking mode for tracking and keeping focusing on a predetermined subject is set, and proceeds to step ST3 in a case where the non-tracking mode for, unlike the tracking mode, not tracking the predetermined subject is set.

In step ST3, the image processing unit 13 performs focus control at a fixed position. The focus control unit 134 of the image processing unit 13 performs focus control while fixing the position of the subject to be focused on. For example, the focus control unit 134 uses the depth map as subject distance information to perform focus control so as to focus on the closest subject indicated by the subject distance information. Note that, in a case where focus control is performed to focus on the closest subject, if the detection range of the closest subject is set in a captured image, focus control to focus on the subject located in front of the subject of interest can be prevented. Furthermore, the focus control unit 134 may perform focus control so as to focus on a subject specified by the user on the captured image or a subject at a position indicated by subject distance information by using information indicating the image position of the subject set on the basis of a recognition result of subject recognition or the like for the captured image as the subject distance information. The focus control unit 134 performs focus control at the fixed position and proceeds to step ST7.

In step ST4, the image processing unit 13 performs subject distance information generation processing. The focus control unit 134 of the image processing unit 13 uses the depth map as subject distance information. Furthermore, the depth value of the predetermined subject and a depth value indicated by the depth map are information indicating perspective and do not indicate a distance. Therefore, the focus control unit 134 may calculate the estimated distance to another subject on the basis of the depth difference between the depth value indicated by the depth map and the depth value of the predetermined subject with the distance to the predetermined subject as a reference, and generate subject distance information indicating the distance to the predetermined subject and the estimated distance to the other subject.

In a case where subject distance information indicating distance information to the predetermined subject and estimated distance information to the other subject is generated, the focus control unit 134 calculates the depth value of the predetermined subject by machine learning using the captured image. Furthermore, the focus control unit 134 calculates the estimated distance by using a difference between the depth value of the predetermined subject and the depth value of the depth map generated in step ST1. Formula (1) exemplifies a calculation formula of the estimated distance DP.

$$DP = (1 + (a - x) \times c) \times d \quad \cdots \quad (1)$$

In Formula (1), a variable "a" indicates the depth value (for example, a value within a range of 0 (far) to 1 (near)) of the predetermined subject, and a variable "x" indicates the depth value (for example, a value within a range of 0 (far) to 1 (near)) indicated by the two-dimensional depth map based on the captured image. The variable "d" indicates an absolute distance obtained from the focus lens position when the predetermined subject is focused on, and the absolute distance is, for example, a distance to the subject that can be calculated by using the focal length of the imaging optical system 11 and the distance from the lens position to the focal position in a state of being in focus, or the distance from the lens position to the focal position in a state of being in focus. The coefficient "c" is an adjustment coefficient for adjusting a distance relationship between the depth value indicated by the depth map and the depth value of the predetermined subject, and in the case of Formula (1), adjusts a distance difference corresponding to a depth difference between the depth value indicated by the depth map and the depth value of the subject. In Formula (1), if the value of the adjustment coefficient "c" increases, the distance difference between the calculated estimated distance and the predetermined subject increases. Therefore, the focus control unit 134 can calculate the estimated distance with emphasis on discriminability between the predetermined subject and the other subject having a different depth value. Furthermore, if the value of the adjustment coefficient "c" decreases, the distance difference between the calculated estimated distance and the predetermined subject decreases. Therefore, the focus control unit 134 can calculate a stable estimated distance with less variation even if the depth value varies. The focus control unit 134 generates the subject distance information and proceeds to step ST5.

In step ST5, the image processing unit 13 searches for a tracking target. The focus control unit 134 of the image processing unit 13 searches for a predetermined subject to be tracked on the basis of the subject distance information generated in step ST4, and proceeds to step ST6.

In step ST6, the image processing unit 13 performs focus control on the basis of the search result. The focus control unit 134 of the image processing unit 13 performs focus control so as to focus on the tracking target searched for in step ST5, and proceeds to step ST7.

In step ST7, the image processing unit 13 determines whether the operation has ended. The focus control unit 134 of the image processing unit 13 returns to step ST1 in a case where the focus operation is in an autofocus mode, and terminates the operation in a case where the focus operation is switched to a manual focus mode or in a case where operation for terminating the imaging operation is performed.

<2-2. Operation Example>

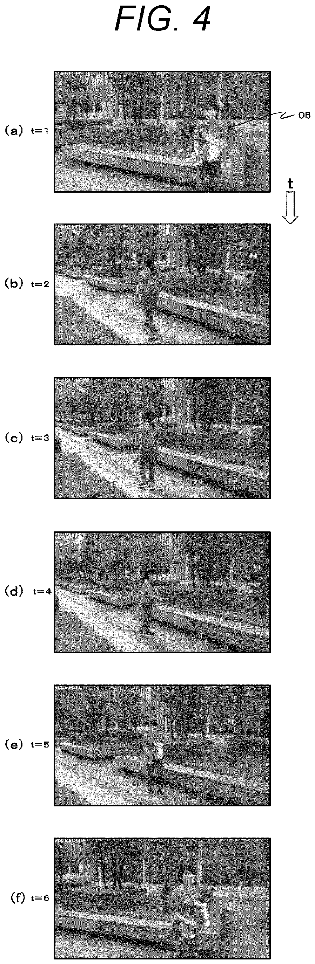

Next, an operation example of the tracking mode will be described with reference to Figs. 4 to 9. Fig. 4 illustrates captured images acquired by the imaging device, and illustrates a case where, for example, a person OB holding a dog, who is a desired subject, moves away and then returns. Note that (a) of Fig. 4 illustrates the captured image at time point t1, (b) of Fig. 4 illustrates the captured image at time point t2, (c) of Fig. 4 illustrates the captured image at time point t3, (d) of Fig. 4 illustrates the captured image at time point t4, (e) of Fig. 4 illustrates the captured image at time point t5, and (f) of Fig. 4 illustrates the captured image at time point t6.

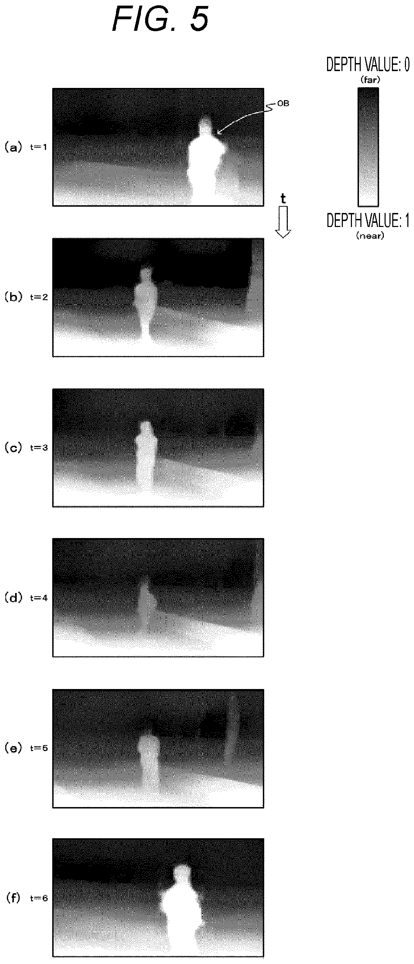

Fig. 5 illustrates depth maps obtained by performing machine learning using the captured images acquired by the imaging device. (a) of Fig. 5 illustrates the depth map at time point t1, (b) of Fig. 5 illustrates the depth map at time point t2, (c) of Fig. 5 illustrates the depth map at time point t3, (d) of Fig. 5 illustrates the depth map at time point t4, (e) of Fig. 5 illustrates the depth map at time point t5, and (f) of Fig. 5 illustrates the depth map at time point t6. Note that, in the depth maps illustrated in Fig. 5, the luminance is high at a close position, and the luminance is low at a far position. The focus control unit 134 can perform autofocus operation without using a ranging sensor by using a depth map obtained by performing machine learning using a captured image.

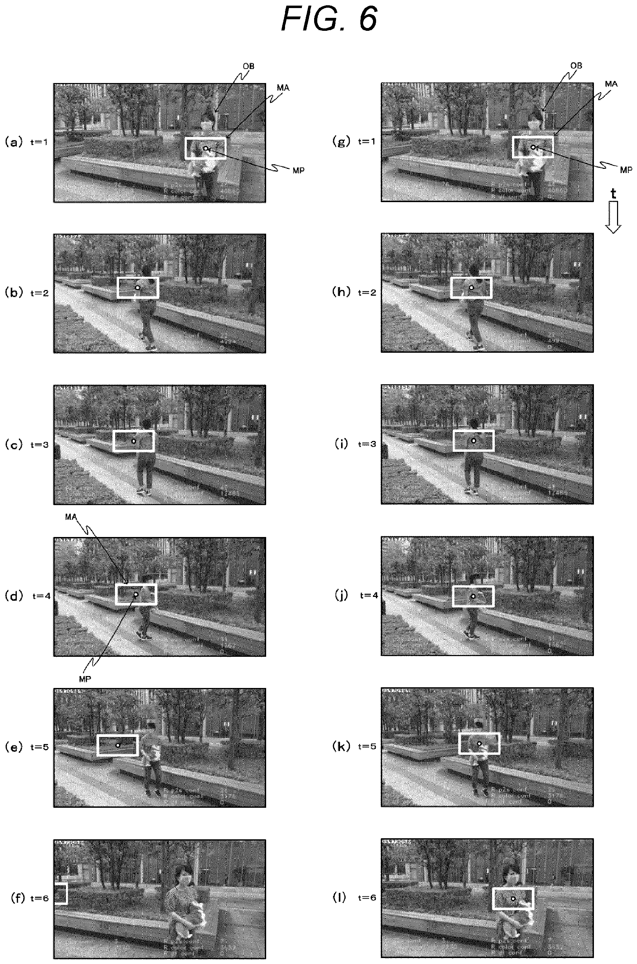

Fig. 6 illustrates focus operation. Note that (a) to (f) of Fig. 6 illustrate conventional operation, and (g) to (1) of Fig. 6 illustrate operation using subject distance information (depth map). Furthermore, Fig. 6 illustrates a rectangular tracking frame MA and a focus point MP in the tracking frame. In the case of using the conventional method of performing tracking on the basis of the pattern and color information, if the pattern and the color of the subject to be tracked are similar to those of the background, the focus point MP moves from the subject to the background at time point t4 as illustrated in (d) of Fig. 6. Therefore, at time point t5 and time point t6, focus control to focus on the focus point positioned in the background is performed, and it is not possible to keep tracking and focusing on the predetermined subject OB. However, if a depth map obtained by performing machine learning using a captured image as in the present technology is used, since the depth values of the background and the subject OB are different, the subject OB can be searched for by using the depth value. Therefore, as illustrated in (g) to (1) of Fig. 6, the subject OB can be tracked and kept focused on during the period from time point t1 to time point t6.

Incidentally, there is a possibility that the depth value indicated by a depth map fluctuates in the time direction. For example, the position of the subject OB at time point t3 is farther than the position at time point t2, but the depth value of the subject OB in (c) of Fig. 5 indicates a distance closer than the depth value of the subject OB in (b) of Fig. 5, and fluctuation occurs in the time direction. Therefore, if the fluctuation increases, there is a possibility that the focus point (tracking frame) moves from the subject OB to another subject.

Therefore, the focus control unit 134 may generate subject distance information indicating distance information to a predetermined subject and estimated distance information to another subject, and search for the predetermined subject on the basis of the generated subject distance information. In this case, in the generation of the subject distance information, as described above, an adjustment coefficient for adjusting the distance difference corresponding to the depth difference between the depth value indicated by the depth map and the depth value of the predetermined subject may be used.

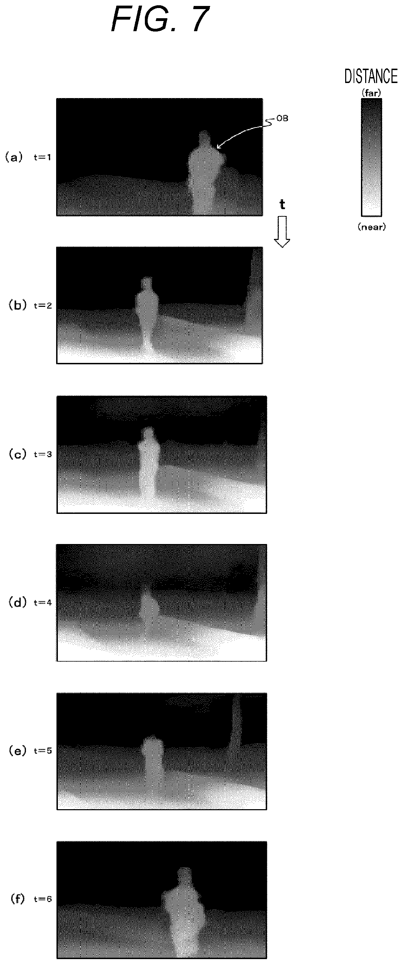

Fig. 7 illustrates subject distance information in a case where the adjustment coefficient c is set to "1". Note that (a) of Fig. 7 illustrates the subject distance information at time point t1, (b) of Fig. 7 illustrates the subject distance information at time point t2, (c) of Fig. 7 illustrates the subject distance information at time point t3, (d) of Fig. 7 illustrates the subject distance information at time point t4, (e) of Fig. 7 illustrates the subject distance information at time point t5, and (f) of Fig. 7 illustrates the subject distance information at time point t6.

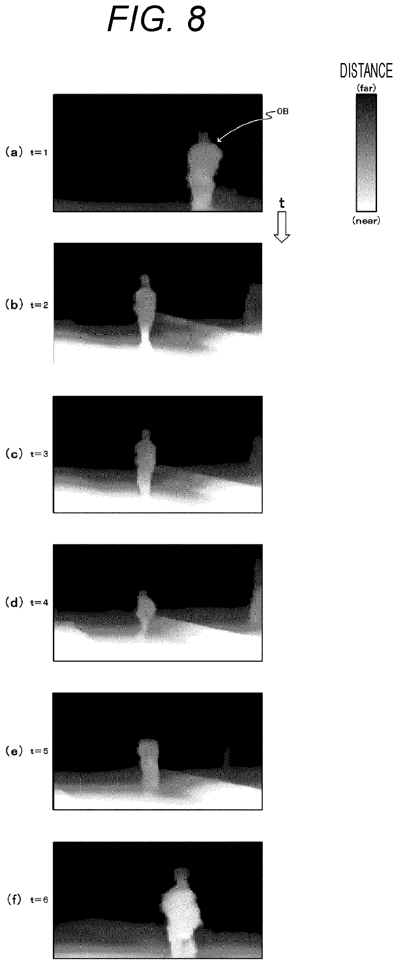

Fig. 8 illustrates subject distance information in a case where the adjustment coefficient c is set to "2". Note that (a) of Fig. 8 illustrates the subject distance information at time point t1, (b) of Fig. 8 illustrates the subject distance information at time point t2, (c) of Fig. 8 illustrates the subject distance information at time point t3, (d) of Fig. 8 illustrates the subject distance information at time point t4, (e) of Fig. 8 illustrates the subject distance information at time point t5, and (f) of Fig. 8 illustrates the subject distance information at time point t6. The subject distance information in a case where the adjustment coefficient c is set to "2" has a larger distance difference between the subject OB and the background than that in a case where the adjustment coefficient c is set to "1". Therefore, focus control that emphasizes discriminability can be performed.

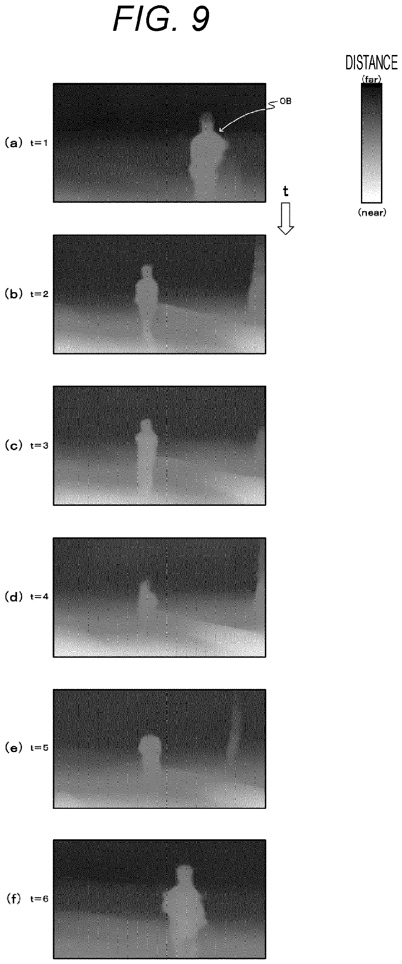

Fig. 9 illustrates subject distance information in a case where the adjustment coefficient c is set to "0.5". Note that (a) of Fig. 9 illustrates the subject distance information at time point t1, (b) of Fig. 9 illustrates the subject distance information at time point t2, (c) of Fig. 9 illustrates the subject distance information at time point t3, (d) of Fig. 9 illustrates the subject distance information at time point t4, (e) of Fig. 9 illustrates the subject distance information at time point t5, and (f) of Fig. 9 illustrates the subject distance information at time point t6. The subject distance information in a case where the adjustment coefficient c is set to "0.5" has a smaller distance difference between the subject OB and the background than that in a case where the adjustment coefficient c is set to "1". Therefore, focus control can be performed with emphasis on stability.

The adjustment coefficient may be set in advance or may be settable by the user. Furthermore, the adjustment coefficient may be set according to the composition of a captured image. For example, in a case where a predetermined person is imaged as a main subject in the composition of a captured image such as a portrait, it is easy to track the main subject. Therefore, the value of the adjustment coefficient c is set to be larger than usual to emphasize discriminability so that the focus point does not move to the foreground or the background. Furthermore, in a scene where multiple persons are subjects, it is difficult to track a predetermined subject, and thus, the value of the adjustment coefficient c is made smaller than usual to emphasize stability.

Furthermore, in a case of the non-tracking mode, the focus control unit 134 performs focus control to focus on the subject at the nearest position indicated by subject distance information generated by using a depth map. For example, in a case where the subject OB illustrated in Fig. 4 does not move from the position at the time point t1 that is the nearest position, the subject OB who is at the nearest position and has not moved can be focused on by performing focus control to focus on the nearest position in the depth map generated from the captured image including the subject OB. Furthermore, in a case where the subject OB is, for example, at the position at time point t5 illustrated in (5) of Fig. 4, if focus control to focus on the nearest position in the depth map generated from the captured image including the subject OB is performed, there is a possibility that the foreground is focused on. However, if the search range is set in the central portion of the captured image and focus control to focus on the subject at the nearest position in the search range is performed, the subject OB can be focused on.

<2-3. Other Operations>

Incidentally, in the above-described operation, a case where focus control is performed by changing the adjustment coefficient has been described as an example, but the focus control unit 134 may perform filtering processing in the time direction on a depth map to reduce fluctuation in the depth value in the time direction. The focus control unit 134 performs infinite impulse response (IIR) filtering processing as filtering processing in the time direction. Furthermore, the focus control unit 134 may perform finite impulse response (FIR) filtering processing or the like as filtering processing in the time direction. Note that the filtering processing in the time direction is not limited to the depth map, and filtering processing of the estimated distance may be performed.

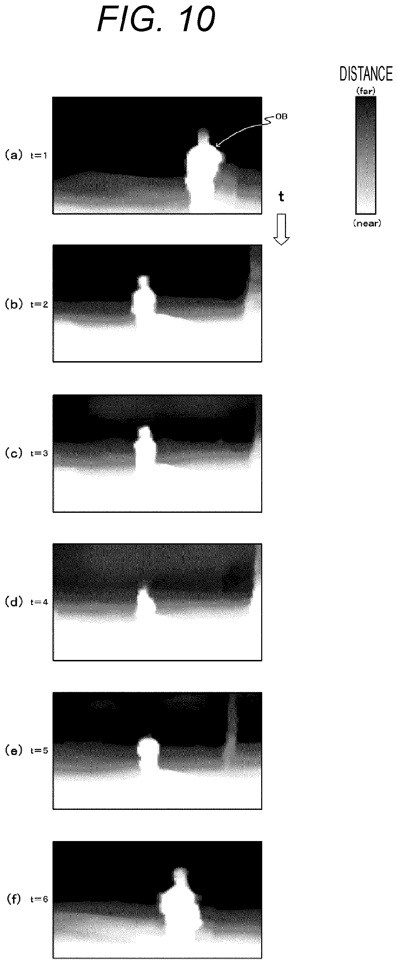

Fig. 10 illustrates subject distance information in a case where IIR filtering processing is performed. Note that Fig. 10 illustrates a case where the adjustment coefficient is "c = 1" and the IIR feedback coefficient is "0.5". Note that (a) of Fig. 10 illustrates the subject distance information at time point t1, (b) of Fig. 10 illustrates the subject distance information at time point t2, (c) of Fig. 10 illustrates the subject distance information at time point t3, (d) of Fig. 10 illustrates the subject distance information at time point t4, (e) of Fig. 10 illustrates the subject distance information at time point t5, and (f) of Fig. 10 illustrates the subject distance information at time point t6. In this case, as illustrated in Fig. 5, even in a case where the depth map fluctuates to indicate that the depth value of the subject OB at time point t3 is closer than the depth value of the subject OB at time point t2, fluctuation is reduced by the filtering processing in the time direction. Therefore, as illustrated in (c) of Fig. 10, the positional difference between the position of the subject OB indicated by the subject distance information at time point t2 and the position of the subject OB indicated by the subject distance information at time point t3 can be made smaller than that before the filtering processing.

In this manner, the focus control unit 134 can perform the filtering processing in the time direction, reduce the influence of fluctuations in the depth value in the time direction, and perform focus control so as to keep tracking and focusing on a predetermined subject.

Furthermore, the adjustment coefficient for adjusting the distance relationship between the depth value indicated by the depth map and the depth value of a predetermined subject is not limited to the coefficient as described above. For example, a coefficient that linearly or non-linearly changes according to a depth difference between the depth value indicated by a depth map and the depth value of a predetermined subject may be used.

<3. Application Example>

The technology according to the present disclosure can be applied to various fields. For example, the technology of the present disclosure may be implemented as a device mounted on any type of mobile body such as an automobile, an electric vehicle, a hybrid electric vehicle, a motorcycle, a bicycle, a personal mobility, an airplane, a drone, a ship, a robot, and the like. Furthermore, the technology may be implemented as a device mounted on an apparatus used in a production process in a factory, or an apparatus used in a construction field.

If the technology is applied to such a field, an image focused on a desired subject can be acquired at low cost and in a small space, and the fatigue of the driver and the worker can be reduced. Furthermore, automated driving and the like can be performed more safely.

The technology according to the present disclosure can be applied to the medical field. For example, if the technology is applied to a case where a captured image of a surgical site is used in performing surgery, an image focused on the surgical site can be easily obtained, and it is possible to reduce fatigue of the operator and perform surgery safely and more reliably.

Furthermore, the technology according to the present disclosure can also be applied to the monitoring field. For example, if the present technology is applied to a monitoring camera, an image focused on a monitoring target can be easily obtained.

A series of processing described herein may be executed by hardware, software, or a composite configuration of both. In a case of executing the processing by the software, a program recorded with a processing sequence is installed and executed in a memory incorporated in dedicated hardware in a computer. Alternatively, the program can be installed and executed on a general-purpose computer capable of executing various processing.

For example, the program can be recorded in advance in a hard disk, a solid state drive (SSD), or a read only memory (ROM) as a recording medium. Alternatively, the program may be temporarily or permanently stored (recorded) in a removable recording medium such as a flexible disk, a compact disc read only memory (CD-ROM), a magneto optical (MO) disk, a digital versatile disc (DVD), a Blu-ray Disc (BD) (registered trademark), a magnetic disk, a semiconductor memory, and the like. Such a removable recording medium can be provided as what is called package software.

Furthermore, in addition to being installed on the computer from the removable recording medium, the program may be transferred to the computer in a wired or wireless manner from a download site via a network such as a wide area network (WAN) represented by cellular, a local area network (LAN), the Internet, and the like. In the computer, it is possible to receive the program transferred in this manner and to install the same on a recording medium such as a built-in hard disk and the like.

Note that the effects described herein are merely examples and are not limited, and additional effects that are not described may be present. Furthermore, the present technology should not be construed as being limited to the above-described embodiments of the technology. The embodiments of this technology disclose the present technology in the form of illustration, and it is obvious that those skilled in the art may modify or replace the embodiments without departing from the gist of the present technology. That is, in order to determine the gist of the present technology, claims should be taken into consideration.

Furthermore, the focus control device of the present technology can also have the following configuration.

(1) A focus control device including:
a control unit configured to perform focus control by using a depth map generated from a captured image including a predetermined subject, and switch the focus control to different control between a tracking mode for tracking the predetermined subject and a non-tracking mode for not tracking the predetermined subject.

(2) The focus control device according to (1), in which in a case of the tracking mode, the control unit performs focus control to focus on the predetermined subject searched for on the basis of subject distance information generated by using the depth map.

(3) The focus control device according to (2), in which the control unit generates the subject distance information by using a depth value indicated by the depth map and a depth value of the predetermined subject.

(4) The focus control device according to (3), in which the control unit generates the subject distance information by using an adjustment coefficient for adjusting a distance relationship between the depth value indicated by the depth map and the depth value of the predetermined subject.

(5) The focus control device according to (4), in which the adjustment coefficient adjusts a distance difference corresponding to a depth difference between the depth value indicated by the depth map and the depth value of the predetermined subject.

(6) The focus control device according to (4) or (5), in which the control unit sets the adjustment coefficient according to a composition of the captured image.

(7) The focus control device according to any one of (2) to (6), in which the control unit performs filtering processing in the time direction and generates the subject distance information.

(8) The focus control device according to (7), in which the control unit performs the filtering processing on the depth map.

(9) The focus control device according to any one of (1) to (8), in which in a case of the non-tracking mode, the control unit performs focus control to focus on a subject at a nearest position indicated by subject distance information generated by using the depth map.

(10) The focus control device according to (9), in which the control unit performs focus control to focus on a subject at a nearest position within a search range provided in the captured image.

(11) The focus control device according to any one of (1) to (10), in which the control unit performs machine learning by using the captured image to generate the depth map.

REFERENCE SIGNS LIST

10     Imaging device

11   Imaging optical system
12   Imaging unit
13   Image processing unit
14   Display unit
15   Recording unit
16   Operation unit
17   System control unit
18   Bus
131   Development processing unit
132   Post processing unit
133   Demodulation processing unit
134   Focus control unit
134a   Depth calculation unit
134b   Control unit

**Claims**

1. A focus control device comprising:
a control unit configured to perform focus control by using a depth map generated from a captured image including a predetermined subject, and switch the focus control to different control between a tracking mode for tracking the predetermined subject and a non-tracking mode for not tracking the predetermined subject.

2. The focus control device according to claim 1, wherein
in a case of the tracking mode, the control unit performs focus control to focus on the predetermined subject searched for on a basis of subject distance information generated by using the depth map.

3. The focus control device according to claim 2, wherein
the control unit generates the subject distance information by using a depth value indicated by the depth map and a depth value of the predetermined subject.

4. The focus control device according to claim 3, wherein
the control unit generates the subject distance information by using an adjustment coefficient for adjusting a distance relationship between the depth value indicated by the depth map and the depth value of the predetermined subject.

5. The focus control device according to claim 4, wherein
the adjustment coefficient adjusts a distance difference corresponding to a depth difference between the depth value indicated by the depth map and the depth value of the predetermined subject.

6. The focus control device according to claim 4, wherein
the control unit sets the adjustment coefficient according to a composition of the captured image.

7. The focus control device according to claim 2, wherein
the control unit performs filtering processing in a time direction and generates the subject distance information.

8. The focus control device according to claim 7, wherein
the control unit performs the filtering processing on the depth map.

9. The focus control device according to claim 1, wherein
in a case of the non-tracking mode, the control unit performs focus control to focus on a subject at a nearest position indicated by subject distance information generated by using the depth map.

10. The focus control device according to claim 9, wherein
the control unit performs focus control to focus on a subject at a nearest position within a search range provided in the captured image.

11. The focus control device according to claim 1, wherein
the control unit performs machine learning by using the captured image to generate the depth map.

12. A focus control method comprising:
by a control unit, performing focus control by using a depth map generated from a captured image including a predetermined subject, and switching the focus control to different control between a tracking mode for tracking the predetermined subject and a non-tracking mode for not tracking the predetermined subject.

13. A program for causing a computer to execute focus control of an imaging device, the program causing the computer to execute:

a procedure of performing focus control by using a depth map generated from a captured image including a predetermined subject; and
a procedure of switching the focus control to different control between a tracking mode for tracking the predetermined subject and a non-tracking mode for not tracking the predetermined subject.

14. An imaging device comprising:

an imaging unit configured to generate a captured image; and
a control unit configured to generate a depth map from a captured image generated by the imaging unit and including a predetermined subject, perform focus control by using the depth map, and switch the focus control to different control between a tracking mode for tracking the predetermined subject and a non-tracking mode for not tracking the predetermined subject.

# FIG. 1

IMAGING UNIT — 12

IMAGE PROCESSING UNIT — 13

DISPLAY UNIT — 14

— 11

— 18

SYSTEM CONTROL UNIT — 17

OPERATION UNIT — 16

RECORDING UNIT — 15

<u>10</u>

EP 4 373 115 A1

## FIG. 2

EP 4 373 115 A1

# FIG. 3

START

ST1 — GENERATE DEPTH MAP

ST2 — TRACKING MODE?

Yes →

No ↓

ST3 — FOCUS CONTROL AT FIXED POSITION

ST4 — SUBJECT DISTANCE INFORMATION GENERATION PROCESSING

ST5 — SEARCH FOR TRACKING TARGET

ST6 — FOCUS CONTROL BASED ON SEARCH RESULT

ST7 — HAS OPERATION ENDED?

No

Yes ↓

END

# FIG. 4

(a) t=1

OB

t

(b) t=2

(c) t=3

(d) t=4

(e) t=5

(f) t=6

# FIG. 5

# FIG. 6

# FIG. 7

# FIG. 8

# *FIG. 9*

# FIG. 10

DISTANCE

(far)

(near)

(a) t=1

OB

t

(b) t=2

(c) t=3

(d) t=4

(e) t=5

(f) t=6

<table>
<tr><td colspan="2" align="center">**INTERNATIONAL SEARCH REPORT**</td><td colspan="2">International application No.<br><br>**PCT/JP2022/003996**</td></tr>
<tr><td colspan="4">**A. CLASSIFICATION OF SUBJECT MATTER**<br><br>*H04N 5/232*(2006.01)i; *G02B 7/28*(2021.01)i; *G03B 13/36*(2021.01)i; *G03B 15/00*(2021.01)i<br>FI: H04N5/232 120; G02B7/28 N; G03B13/36; G03B15/00 V; G03B15/00 S<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br><br>H04N5/232; G02B7/28; G03B13/36; G03B15/00</td></tr>
<tr><td colspan="4">Documentation searched other than minimum documentation to the extent that such documents are included in the fields searched<br><br>Published examined utility model applications of Japan 1922-1996<br>Published unexamined utility model applications of Japan 1971-2022<br>Registered utility model specifications of Japan 1996-2022<br>Published registered utility model applications of Japan 1994-2022</td></tr>
<tr><td colspan="4">Electronic data base consulted during the international search (name of data base and, where practicable, search terms used)</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| Y | JP 2017-103525 A (NIKON CORP) 08 June 2017 (2017-06-08)<br>    paragraphs [0002], [0085]-[0090], etc. | 1-3, 7-14 |
| A | | 4-6 |
| Y | JP 2004-505393 A (DYNAMIC DIGITAL DEPTH RESEARCH PTY LTD) 19 February 2004 (2004-02-19)<br>    claims, paragraphs [0024], [0025], [0090]-[0093], etc. | 1-3, 7-14 |

☐ Further documents are listed in the continuation of Box C.       ☑ See patent family annex.

| | |
|---|---|
| \* Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br><br>**20 April 2022** | Date of mailing of the international search report<br><br>**10 May 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

INTERNATIONAL SEARCH REPORT
Information on patent family members

International application No.

**PCT/JP2022/003996**

| Patent document cited in search report | | | Publication date (day/month/year) | Patent family member(s) | | | Publication date (day/month/year) |
|---|---|---|---|---|---|---|---|
| JP | 2017-103525 | A | 08 June 2017 | (Family: none) | | | |
| JP | 2004-505393 | A | 19 February 2004 | US | 2002/0048395 | A1 | |
| | | | | claims, paragraphs [0047]-[0049], [0145]-[0147], etc. | | | |
| | | | | WO | 2002/013141 | A1 | |
| | | | | CA | 2418800 | A1 | |
| | | | | CN | 1466737 | A | |
| | | | | KR | 10-2003-0062313 | A | |

Form PCT/ISA/210 (patent family annex) (January 2015)

22

**EP 4 373 115 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008009341 A